# FASCICULE DE BREVET EUROPEEN

(11) **EP 3 607 021 B1**
(45) Date de publication et mention de la délivrance du brevet: **19.08.2026**
(21) Numéro de dépôt: 18713293.1
(22) Date de dépôt: 30.03.2018
(51) Int. Cl.: C09K 8/493, C04B 24/16, C04B 28/02

(54) **ASSOCIATION POUR LE CONTRÔLE DU FILTRAT ET LA MIGRATION DE GAZ**
KOMBINATION ZUR FILTRATSTEUERUNG UND GASMIGRATION
COMBINATION FOR FILTRATE CONTROL AND GAS MIGRATION

(30) Priorité: 03.04.2017 FR 1752840
(43) Date de publication de la demande: 12.02.2020
(73) Titulaire: Energy Solutions (US) LLC, The Woodlands, TX 77381 (US)
(72) Inventeur: CADIX, Arnaud, 59800 Lille (FR)
(74) Mandataire: Ipsilon
(86) Numéro de dépôt international: PCT/EP2018/058364
(87) Numéro de publication internationale: WO 2018/185037

(56) Documents cités:
- EP-A1- 1 950 266
- EP-A1- 3 115 432
- WO-A1-2015/049378
- WO-A1-2016/162388
- US-A1- 2013 203 951
- JOHANN PLANK ET AL: "Effect of different anchor groups on adsorption behavior and effectiveness of poly(N,N-dimethylacrylamide-co-Ca 2-acrylamido-2-methylpropanesulfonate) as cement fluid loss additive in presence of acetone-formaldehyde-sulfite dispersant", vol. 106, no. 6, 1 June 2007 (2007-06-01), pages 3889 - 3894, XP002693166, Retrieved from the Internet <URL:http://onlinelibrary.wiley.com/doi/10.1002/app.26897/abstract> [retrieved on 20070904], DOI: 10.1002/APP.26897

## Description

La présente invention a trait au domaine de l'extraction pétrolière. Plus précisément, elle concerne des agents assurant un effet de contrôle du filtrat et de migration de liquides et de gaz dans des fluides injectés sous pression dans des formations souterraines.

Dans le domaine de l'extraction pétrolière, de nombreuses étapes sont conduites en injectant des fluides sous pression au sein de formations souterraines. Dans la présente description, la notion de « *formation souterraine* » s'entend dans son acception la plus large et inclut aussi bien une roche contenant des hydrocarbures, notamment du pétrole, que les différentes couches de roche traversées pour accéder à cette roche pétrolifère et assurer l'extraction des hydrocarbures. Au sens de la présente description, la notion de « *roche* » est utilisée pour désigner tout type de matériau constitutif d'une formation souterraine solide, que le matériau la constituant soit, ou non, une roche à proprement parler. Ainsi, en particulier, l'expression « roche pétrolifère » est employée ici comme synonyme de « *réservoir pétrolifère* » et désigne toute formation souterraine contenant des hydrocarbures, notamment du pétrole, quelle que soit la nature du matériau contenant ces hydrocarbures (roche ou sable par exemple).

Parmi les fluides injectés sous pression dans des formations souterraines, on peut notamment citer les différents fluides de complétion et reconditionnement des puits, notamment les fluides de forage , qu'ils soient utilisés pour accéder à la roche pétrolière ou bien pour forer le réservoir lui-même (« *drill in* ») ou bien les fluides de fracturation, ou bien encore les fluides de complétion, les fluides de contrôle ou de reconditionnement (« *workover fluids* ») ou les fluides d'annulaire ou fluides de « *packer* »*.*

Un cas spécifique est celui des coulis de ciment pétrolier, qui sont employés pour la cimentation de l'annulaire des puits pétroliers selon une méthode bien connue en soi, décrite par exemple dans Le Forage par J.P Nguyen (Editions Technip 1993). Ces coulis de ciment pétroliers sont injectés sous pression dans l'intérieur d'un tubage métallique (cuvelage) introduit dans le trou de forage des puits de pétrole puis remontent, sous l'effet de la pression par l'espace dit « annulaire » (« *annulus* » en anglais) situé entre le cuvelage et le trou de forage puis prennent et durcissent dans cet annulaire, assurant ainsi la stabilité du puits en cours de forage.

Au sein d'un puits d'extraction pétrolière, la mise en contact du fluide sous pression et de la formation souterraine (qui présente le plus souvent une porosité plus ou moins élevée, voire des fissures) induit un effet dit de « *perte de fluide* » dit également de « *filtrat* » (phénomène désigné par le terme de « *fluid loss* » en anglais) : le liquide présent dans le fluide a tendance à pénétrer dans la roche constitutive de la formation souterraine, ce qui peut endommager le puits, voire nuire à son intégrité. Lorsque ces fluides employés sous pression contiennent des composés insolubles (ce qui est très souvent le cas, notamment pour les coulis de ciment pétrolier ou bien les fluides de forages ou de fracturation comprenant des polymères), l'effet de perte de fluide induit en parallèle une concentration du fluide, ce qui peut conduire à une augmentation de viscosité affectant la mobilité du fluide.

Dans le cas particulier d'un coulis de ciment, la perte de fluide peut en outre induire une prise trop rapide du ciment, avant que l'espace de l'annulaire soit cimenté, ce qui peut, entre autres, fragiliser la structure du puits et nuire à son étanchéité.

Pour plus de détails concernant l'effet de perte de fluide et ses effets en cimentation, on pourra notamment se reporter à Weil Cementing, E.B. Nelson (Elsevier, 1990).

En vue d'inhiber le phénomène de perte de fluide, il a été décrit un certain nombre d'additifs qui permettent de limiter (voir d'empêcher totalement dans certains cas) la fuite du liquide présent dans le fluide vers la roche avec laquelle il entre en contact. Ces additifs, dits « *agents de contrôle du filtrat* » (ou « *fluid loss control agents »* en anglais) permettent en général d'obtenir, en parallèle, un effet de contrôle de la migration de gaz, à savoir une isolation du fluide vis-à-vis des gaz contenus dans la roche (gaz dont il convient d'éviter qu'ils ne pénètrent le fluide notamment dans le cas de coulis de ciment, ces gaz ayant tendance à fragiliser le ciment en cours de prise).

Au sens de la présente invention et sauf indication explicite contraire, on entend par « perte de fluide » aussi bien un phénomène de migration de liquide qu'un phénomène de migration de gaz.

Divers agents de contrôle du filtrat du type précité ont été proposés, qui incluent notamment des dérivés cellulosiques (hydroxyéthylcellulose, par exemple) ou bien encore des copolymères à base d'AMPS comme ceux décrits par exemple dans US 4,632,186 ou US 4,515,635, ou les polymères séquencés décrits dans WO2016/162388 et WO2015/049378.

Ces additifs ne sont pas toujours pleinement adaptés pour assurer, en pratique, une limitation efficace de la perte de fluide. En particulier, et c'est notamment le cas dans le domaine des coulis de ciment pétrolier, la présence d'autres additifs peut inhiber l'effet des agents employés pour assurer le contrôle du filtrat. En particulier, en présence de certains agents dispersants ou agents retardateurs de prise, les agents de contrôle du filtrat précités voient en général leurs propriétés se dégrader.

Un but de la présente invention est de fournir de nouveaux agents de contrôle du filtrat pour des fluides injectés sous pression dans des formations souterraines, qui soient bien adaptés en pratique.

A cet effet, la présente invention propose d'utiliser une association spécifique incluant (i) des copolymères particuliers, qui sont propres à assurer un effet de contrôle du filtrat lorsqu'ils sont employés avec des particules, avec lesquelles ils s'associent, (ces particules pouvant être des particules présentes au sein de la formation souterraine ; et/ou des particules de ciment ; et/ou des particules injectées au sein de formations souterraines avec les copolymères), et (ii) une composition particulière induisant un effet barrière aux gaz, typiquement un latex ou des particules de silice, telle que décrit dans la revendication 1.

Plus précisément, selon un premier aspect, la présente invention a pour objet l'utilisation d'une association comprenant un polymère séquencé (P) et des particules propres à assurer un effet barrière de gaz, à titre d'agent de contrôle du filtrat et/ou de la migration de gaz dans un fluide (F) injecté sous pression dans une formation souterraine, dans laquelle ledit fluide (F) est aqueux et comprend des particules solides (p) et/ou est mis en contact avec des particules solides (p) au sein de la formation souterraine suite à son injection, ledit fluide (F) étant un coulis de ciment pétrolier, qui comprend le polymère séquencé (P) en tant qu'additif,
dans laquelle les particules solides (p) sont des particules minérales choisies parmi les particules de ciment, de carbonate de calcium, d'argile, de barite, de silice, de sable ou de noir de carbone,
dans laquelle
   (i) le polymère séquencé (P) comprend :
      - un premier bloc (A) qui s'adsorbe sur au moins une partie des particules solides (p) ; et
      - un deuxième bloc (B), de composition distincte de celle dudit premier bloc (A), de masse moléculaire moyenne en poids supérieure à 10 000 g/mol, par exemple supérieure à 100 000 g/mol et soluble dans le fluide (F),
   (ii) les particules propres à assurer un effet barrière de gaz sont un latex ou des particules de silice,
      - le latex est sous la forme d'une suspension contenant de 35 à 60 % en poids de latex sec, et la quantité de latex sec est de 1,5 à 6% massique par rapport à la quantité de particules solides (p) contenues dans le fluide (F), et
      - la quantité de silice est de 1,5 à 6% massique par rapport à la quantité de particules solides (p) contenues dans le fluide (F) ; et
dans laquelle le premier bloc (A) est constitué au moins majoritairement par des unités monomères choisies dans les groupes préférentiels définis dans la revendication 1, en fonction de la nature des particules solides (p).

Selon un mode de réalisation, les particules propres à assurer un effet barrière de gaz est un latex.

Le latex est sous la forme d'une suspension contenant de 35 à 60%, typiquement de 40 à 55%, par exemple de 40 à 50% en poids de latex sec.

Le ratio de concentration massique du polymère (P) par rapport à celle du latex sec est compris entre 4 et 8%.

Dans l'association du polymère (P) avec un latex de l'invention qui permet d'employer moins de quantité de latex pour assurer un effet barrière de gaz, la quantité de latex sec est de 1,5 à 6% massique par rapport à la quantité de particules solides (p) contenues dans le fluide (F), i.e., du coulis de ciment pétrolier. De préférence, la quantité de latex sec est supérieure à 2%, typiquement supérieure à 2,2, voire supérieure à 2,5% et inférieure à 5,5%, ou par exemple inférieure à 4,5%, voire inférieure à 4% massique par rapport à la quantité de particules solides (p) contenues dans le fluide (F), i.e., du coulis de ciment pétrolier.

Généralement, la quantité de polymère (P) est de 0,1 à 0,5% massique par rapport à la quantité de particules solides (p) contenues dans le fluide (F), i.e., du coulis de ciment pétrolier. De préférence, la quantité de polymère est supérieure à 0,2% et inférieure à 0,4% massique par rapport à quantité de particules solides (p) contenues dans le fluide (F), par exemple, la quantité de polymère (P) peut être de 0,2 à 0,4%, ou de 0,25 à 0,4% massique par rapport à la quantité de particules solides (p) contenues dans le fluide (F).

Le latex est typiquement en styrène-butadiène ayant un rapport pondéral styrène-butadiène compris entre 30 :70 et 70 :30, de préférence, entre 40 :60 et 60 :40, mis en suspension dans une solution aqueuse.

La solution aqueuse peut comprendre en outre un stabilisant au latex, par exemple un tensioactif tel qu'il est bien connu dans ce domaine. Un exemple des suspensions de latex sont décrits dans EP 0091377.

Il s'avère que lorsque le polymère (P) est associé avec un latex styrène-butadiène dans un coulis de ciment pétrolier, l'association assure à la fois le contrôle du filtrat et le contrôle de la migration de gaz.

Selon un autre mode de réalisation, les particules propres à assurer un effet barrière de gaz sont des particules de silice, typiquement sous forme amorphe.

Les particules de silice sont typiquement dispersées ou sous forme d'agrégats constitués de particules élémentaires de 5 nm à 5 µm, de préférence de 50 nm à 500 nm.

Les particules de silice peuvent être par exemple sous forme d'une fumée de silice.

Il s'avère en effet que lorsque le polymère (P) est associé avec les particules de silice dans un coulis de ciment pétrolier, l'association assure à la fois le contrôle du filtrat et le contrôle de la migration de gaz.

La quantité de silice est de 1,5 à 6% massique par rapport à la quantité de particules solides (p) contenues dans le fluide (F), i.e., du coulis de ciment pétrolier. De préférence, la quantité de silice est supérieure à 2%, typiquement supérieure à 2,2, voire supérieure à 2,5% et inférieure à 5,5%, par exemple inférieure à 4,5%, voire inférieure à 4% massique par rapport à la quantité de particules solides (p) contenues dans le fluide (F), i.e., du coulis de ciment pétrolier.

Généralement, la quantité de polymère (P) est de 0,1 à 0,5% massique par rapport à la quantité de particules solides (p) contenues dans le fluide (F), i.e., du coulis de ciment pétrolier. Plus avantageusement, la quantité de polymère (P) est supérieure à 0,2% et inférieure à 0,4% massique par rapport à la quantité de particules solides (p) contenues dans le fluide (F), par exemple, la quantité de polymère (P) peut être de 0,2 à 0,4%, ou de 0,25 à 0,4% massique par rapport à la quantité de particules solides (p) contenues dans le fluide (F).

Au sens de la présente invention, typiquement, le premier bloc (A), dit aussi ci-après « bloc court », est de masse moléculaire moyenne en poids typiquement inférieure à 30 000 g/mol, qui s'adsorbe, de préférence irréversiblement, sur au moins une partie des particules (p); et un deuxième bloc (B), dit aussi ci-après «bloc long », est de composition distincte de celle dudit premier bloc et de masse moléculaire moyenne en poids supérieure à 10 000 g/mol, par exemple supérieure à 100 000 g/mol, et soluble dans le fluide (F).

Le polymère spécifique employé dans le cadre de la présente invention, de par la présence des deux blocs spécifiques (A) et (B) s'avère fournir un effet de contrôle du fluide particulièrement efficace : la présence du bloc (A) assure un ancrage du polymère sur les particules, et la présence du bloc long (B), de taille élevée et soluble, assure schématiquement un effet d'augmentation locale de la viscosité du fluide (F) autour des particules.

On obtient ainsi, à la surface des particules (p), la formation d'une couche polymère à base des blocs longs (B) ancrés sur les particules à l'aide des blocs (A), l'association particules/polymères ainsi réalisée formant en quelque sorte un « bouchon » de taille suffisante au niveau des porosités de la roche, qui permet de limiter, voire de bloquer totalement, le phénomène de filtrat.

Il est à noter que l'emploi de polymères à base de blocs longs (B) uniquement n'assurerait pas un contrôle du filtrat selon l'invention, qui nécessite un ancrage des blocs longs (B) sur les particules (p) *via* les blocs courts (A), comme cela est illustré dans les exemples donnés à la fin de la présente description.

Notamment pour que cet ancrage soit le plus efficace possible, il est préférable que l'interaction entre le bloc court (A) et les particules (p) soit la plus forte possible et, avantageusement, que cette interaction soit irréversible. De préférence, le bloc court (A) d'un polymère (P) utile selon l'invention comporte :
- au moins un groupement chimique formant au moins une liaison de type ionique, covalente ou iono-covalente entre polymère et particule ;
   et/ou
- plusieurs groupements chimiques formant chacun au moins une liaisons hydrogène et/ou de Van der Waals entre polymère et particule, l'ensemble de ces liaisons formant ensemble une liaison globale de force au moins dans la gamme de celle d'une liaison de type ionique, covalente, iono-covalente.

Les interactions fortes entre particules et polymères permettent en outre, au besoin, d'employer le polymère (P) en présence d'additifs qui, habituellement, nuisent à l'efficacité des agents de contrôle du filtrat. En particulier, les polymères (P) peuvent être mis en œuvre dans la plupart des formulations de fluides destinés à être injectés dans des roches pétrolières, notamment des coulis de ciment pétrolier comprenant des additifs de type dispersants ou agents retardateur de prise aussi bien que dans des fluides de forage et de fracturation.

Selon une première variante de l'invention, le fluide (F) injecté comprend le polymère (P) mais ne comprend pas de particules solides (p), et il rencontre lesdites particules (p) au sein de la formation souterraine suite à son injection. L'association entre particules et polymères se fait alors *in situ.* Un tel fluide peut par exemple être injecté lors d'une opération de forage, et les déblais de roche formés lors du forage assurent alors le rôle des particules (p) *in situ.*

Selon une variante alternative, le fluide (F) injecté comporte avant l'injection au moins une partie, et en général la totalité, des particules (p) associées au polymère (P), étant entendu qu'il peut éventuellement rencontrer d'autres particules (p) au sein de la formation souterraine.

Deux modes sont notamment envisageables dans ce cadre :
- mode 1 : le polymère (P) et les particules (p) sont mélangés lors de la formulation du fluide (F), sur le lieu de l'exploitation ou en amont, typiquement en additionnant les particules (p), à l'état sec ou éventuellement à l'état dispersé, à une composition comprenant le polymère (P) en solution. Selon cette variante, le fluide (F) est préparé en ajoutant de la poudre de ciment à titre de particules (p) dans une composition aqueuse comprenant le polymère (P) en solution.
- mode 2 : le fluide (F) est fabriqué, avantageusement sur le lieu de l'exploitation, à partir d'une composition (pré-mélange) préparée en amont (désignée ci-après par le terme de « *blend* ») comprenant le polymère (P) et au moins une partie des particules (p), en général au sein d'un liquide dispersant. Pour former le fluide (F), ce *blend* est mélangé aux autres constituants du fluide (F).

Dans le cadre de ces modes 1 et 2, le polymère (P) présente accessoirement l'avantage non négligeable d'améliorer la dispersibilité et la mise en suspension des particules (p). Dans certains modes de réalisation, les polymères (P) associés aux particules (p) peuvent être employés principalement en tant qu'agent dispersant et stabilisant de la dispersion des particules (p), en assurant dans le même temps un effet d'agent de contrôle du filtrat.

Selon un autre aspect, la présente invention a pour objet certains polymères séquencés particuliers utilisables selon l'invention, qui ont été développés par les inventeurs spécifiquement pour cette application.

L'invention a également pour objet les fluides pour injection sous pression au sein d'une roche pétrolière ou d'un puits de forage comprenant ces polymères séquencés spécifiques, ainsi que les *blends* pour la préparation de ces fluides comprenant ces polymères en association à des particules (p).

Différents avantages et modes de réalisation particuliers de l'invention vont maintenant être décrits plus en détails.

### Le fluide (F) et le bloc long (B)

Par « *fluide* », on entend, au sens de la description tout milieu aqueux, homogène ou non, comprenant un vecteur liquide ou visqueux transportant éventuellement une phase dispersée, liquide ou gélifiée, et/ou des particules solides, ledit milieu étant globalement pompable au moyen des dispositifs d'injection sous pression utilisés dans l'application considérée. Selon la présente description, ledit fluide (F) est un coulis de ciment pétrolier, qui comprend le polymère séquencé (P) en tant qu'additif.

Par « *vecteur liquide ou visqueux*» du fluide (F), on entend le fluide lui-même ; ou bien le solvant dans le cas où le fluide comprend des composés dissous et/ou la phase continue dans le cas où le fluide contient des éléments dispersés (gouttelettes de phase dispersée liquide ou gélifiée, particules solides...).

La nature du fluide aqueux (F) et du bloc long (B) des polymères (P) utilisés selon la présente invention peut varier en une assez large mesure, sous réserve de la compatibilité du vecteur liquide ou visqueux du fluide (F) et du bloc long (B). En particulier, on emploie un bloc long (B) de nature hydrophile lorsque le vecteur liquide ou visqueux présent dans le fluide (F) est de nature hydrophile.

Le bloc long (B) des polymères utiles selon l'invention est spécifiquement soluble dans le fluide (F). On entend par là que le bloc long (B) pris isolément peut être dissous dans le vecteur liquide ou visqueux du fluide (F). De préférence, le bloc long (B) est soluble à 25°C et à 1% en masse dans le vecteur liquide ou visqueux du fluide (F). La notion de « solubilité à 25°C » implique uniquement qu'on peut obtenir une solution plus ou moins visqueuse, voire gélifiée qui, à 25°C, ne conduit pas à une précipitation. Cette notion n'exclut pas que la mise en solution du bloc (B) puisse impliquer un chauffage préalable à plus de 25°C pour obtenir cette solution. En d'autres termes, la notion de « solubilité à 25°C » implique la possibilité de former une solution qui ne précipite pas à 25°C, et non pas la possibilité de former à 25°C une solution qui ne précipite pas.

Par ailleurs, il est préférable que le bloc long (B) développe le moins possible d'interactions, voire pas du tout d'interactions, avec les particules (p). Il est par ailleurs préférable que le bloc long (B) des polymères (P) utiles selon l'invention développe moins d'interactions avec les particules que le bloc court (A).

En tout état de cause, le bloc (A) et le bloc (B) ont des compositions distinctes. On entend par là que:
- les blocs (A) et (B) comprennent des unités monomères distinctes ;
   ou
- au moins certains des monomères présents sur le bloc (A) ne sont pas présents sur le bloc (B); et/ou au moins certains des monomères présents sur le bloc (B) ne sont pas présents sur le bloc (A)
   ou
- le bloc (A) et le bloc (B) comprennent les mêmes unités monomères, mais dans des proportions distinctes.

Selon la présente description, le fluide (F) est un fluide aqueux. Par « aqueux », on entend ici que le fluide comprend à titre de vecteur liquide ou visqueux de l'eau, soit à titre d'unique constituant du vecteur liquide ou visqueux, soit en association avec d'autres solvants hydrosolubles.

En cas de présence de solvants autres que l'eau dans le vecteur liquide ou visqueux du fluide (F), l'eau reste avantageusement le solvant majoritaire au sein du vecteur liquide ou visqueux, présent avantageusement à raison d'au moins 50% en masse, voire d'au moins 75% en masse par rapport à la masse totale des solvants dans le vecteur liquide ou visqueux.

Le bloc (B) est avantageusement un bloc de nature hydrophile. Par « *bloc de nature hydrophile* », on entend ici un bloc polymère qui, à l'état isolé, est soluble dans l'eau pure à raison de 1% en masse à 25°C (la mise en solution pouvant éventuellement impliquer un chauffage), en formant une solution plus ou moins visqueuse, voire gélifiée, mais sans formation de précipité à 25°C.

Avantageusement, le bloc (B) de nature hydrophile employé est constitué au moins majoritairement par des unités monomères choisies dans le groupe consistant en les unités monomères U1 à U5 définies ci-après, et les mélanges de ces unités monomères :
- **unités monomères U1:** unités monomères comprenant un groupement fonctionnel acrylamide, notamment diméthylacrylamide (DMA) ou bien encore (méth)acrylamide, morpholine N-oxide acrylamide, diacétone acrylamide ; le bloc (B) comprend avantageusement des unités monomères de ce type.
- **unités monomères U2:** unités monomères comprenant un groupement fonctionnel acide sulfonique ou sulfonate, incluant notamment les unités (méth)acrylate de 3-sulfopropyle, acide 2-propène-1-sulfonique, 1-allyloxy-2 hydroxypropyle sulfonate de sodium (COPS1), notamment acide 2-acrylamido-2-méthyle propane sulfonique (AMPS), sulfonate de (méth)allyle, vinyle sulfonate de sodium, sodium styrène sulfonate, 3-sulfopropyldiméthyl-3-méthacrylamidopropylammonium, N-(2-méthacryloyloxyéthyl)-N,N-diméthyl-N-(3-sulfopropyl)ammoniumbétaine, N-(2-1-(3-sulfopropyl)-2-vinylpyridiniumbétaine.
- **unités monomères U3** : unités monomères neutres incluant entre autres :
   les esters d'acides mono- ou di- carboxyliques [alpha],[beta]-éthyléniquement insaturés avec des alcanediols en C2-C30 ou des polyéthylèneglycols, par exemple les 2-hydroxyéthylacrylate, 2-hydroxyéthylméthacrylate, 2-hydroxyéthyléthacrylate, 2-hydroxypropylacrylate, 2-hydroxypropylméthacrylate, 3-hydroxypropyl acrylate, 3-hydroxypropylméthacrylate, 3-hydroxybutylacrylate, 3-hydroxybutyl méthacrylate, 4-hydroxybutylacrylate, 4-hydroxybutylméthacrylate, 6-hydroxy hexylacrylate, 6-hydroxyhexylméthacrylate, 3-hydroxy-2-éthylhexyl acrylate, 3-hydroxy-2-éthylhexylmethacrylate, N-(hydroxyméthyl)acrylamide, N-(2-hydroxy propyl)méthacrylamide, N-hydroxyéthylacrylamide, N-[tris(hydroxyméthyl) méthacrylamide, 4-acryloylmorpholine, 2-N-morpholinoéthyle méthacrylate, méth(acrylate) de polyéthylèneglycol, (méth)acrylate de diéthylène glycol, éthylène glycol méthyl éther (méth)acrylate, acrylate de 2-hydroxyéthyle, acrylate d'hydroxypropyle, acrylate de poly(propylène glycol), acrylate de 2-chloroéthyle,
   les acrylates de tétrahydrofurfuryle, de vinyl acétamide, vinyl pyrrolidone, N-vinyl pipéridone, N-vinyl caprolactam, N-vinyl-5-methyl-2-pyrrolidone, N-vinyl-5-éthyl-2-pyrrolidone, N-vinyl-6-méthyl-2-pipéridone, N-vinyl-6-éthyl-2-pipéridone, N-vinyl-7-méthyl-2-caprolactame, N-vinyl-7-éthyl-2-caprolactame.
- **unités monomères U4:** unités monomères porteuses de groupements ammonium, notamment des esters d'acides mono- ou di- carboxyliques [alpha],[beta]-éthyléniquement insaturés avec des aminoalcools, comme les N,N-diméthylaminométhyl(méth)acrylate, N, N-diméthylaminoéthyl (méth)acrylate, N,N-diéthylaminoethyl acrylate, N,N-dimethylaminopropyl (méth)acrylate, N,N-diéthylaminopropyl(méth)acrylate et N,N-dimethylaminocyclohexyl (méth)acrylate ;
   amides d'acides mono- ou di- carboxyliques [alpha],[beta]-éthyléniquement insaturés avec des diamines ayant au moins un groupe amine primaire ou secondaire, tels que les N-[2-(diméthylamino)ethyl]acrylamide, N[2-(dimethyl amino)ethyl]methacrylamide, N-[3-(diméthylamino)propyl]acrylamide, N-[3-(diméthylamino)propyl]methacrylamide, N-[4-(diméthylamino)butyl]acrylamide, N-[4-(diméthylamino)butyl]méthacrylamide, N-[2-(diethylamino)ethyl] acrylamide, N-[4-(dimethylamino)cyclohexyl]acrylamide, N-[4-(dimethylamino) cyclohexyl]méthacrylamide N,N-diallylamines et N,N-diallyl-N-alkylamines incluant notamment les 3-sulfopropyldiméthyl-3-méthacrylamidopropylammonium, N-(2-méthacryloyl oxyéthyl)-N,N-diméthyl-N-(3-sulfopropyl)ammoniumbétaine, N-(2-1-(3-sulfo propyl)-2-vinylpyridiniumbétaine, et N-(2-1-(3-sulfopropyl)-4-vinylpyridinium bétaine
- **unités monomères U5 :** unités monomères acrylate, porteuses de groupement COOH ou COO-, incluant notamment l'acide acrylique, l'acide méthacrylique, l'acide éthacrylique, l'acide [alpha]-chloro-acrylique, l'acide crotonique, l'acide maléique, l'acide itaconique, l'acide citraconique, l'acide mésaconique, l'acide glutaconique, l'acide aconitique, l'acide fumarique ; les monoesters d'acide dicarboxylique monoéthyléniquement insaturés en C4-C10 et de préf rence en C4 à C6, comme le maléate de monométhyle. Selon un mode de réalisation possible, le bloc (B) de nature hydrophile employé lorsque le fluide (F) est un fluide aqueux est constitué essentiellement, voire exclusivement, par des unités monomères du type précités,
où, dans les unités précitées, les groupes acides peuvent être en tout ou partie sous la forme d'acide libre et/ou sous forme de sel par exemple de potassium, sodium ou ammonium (forme neutralisée).

Au sens où elle est employée dans la présente description, l'expression « *polymère ou bloc polymère constitué au moins majoritairement par des unités monomères 'x'* » désigne un (bloc) homopolymère ou copolymère résultant de la polymérisation d'un mélange de monomères incluant des monomères x, ce (bloc) homopolymère ou copolymère comprenant moins de 25% en mole, de préférence moins de 15% et encore plus avantageusement moins de 10% en mole d'unités monomères autres que les unités 'x'.

L'expression « *polymère ou bloc polymère constitué essentiellement par des unités monomères 'x'* » désigne quant à elle, au sens de la présente description, un (bloc) homopolymère ou copolymère constitué au moins majoritairement par des unités monomères 'x' du type précité, comprenant plus spécifiquement moins de 5% en mole, de préférence moins de 2% et encore plus avantageusement moins de 1% en mole d'unités monomères autres que les unités 'x'.

Selon un mode de réalisation particulier, compatibles avec les modes précédents, le bloc (B) de nature hydrophile employé peut comprendre des monomères hydrophobes en faibles proportions, typiquement à raison d'au moins 0,05%, notamment au moins 0,1%, voire au moins 0,5%, le cas échéant ; cette teneur en monomères hydrophobes restant de préférence inférieure à 10 %, par exemple inférieure à 5%, notamment moins inférieure à 3%, voire à 2%, ces pourcentages étant exprimés en masse par rapport à la masse totale d'unité monomères dans le bloc (B). Lorsque des monomères hydrophobes de ce type sont présents, ils peuvent typiquement (mais non limitativement) être choisis parmi les acrylates d'alkyle (comme l'acrylate de méthyle) ; le styrène ; les méthacrylates d'alkyle ; et/ou l'acétate de vinyle.

Le bloc long (B) présent dans les polymères employés selon la présente invention a par ailleurs une masse suffisamment élevée pour assurer l'effet de contrôle du filtrat recherché. A cet effet, le bloc (B) a typiquement une masse moléculaire moyenne en poids supérieure à 100 000 g/mol, de préférence supérieure à 150 000 g/mol, par exemple supérieur à 200 000 g/mol, notamment supérieur à 250 000 g/mol, et ce notamment lorsque le bloc (B) est de l'un des types précités. En pratique, cette masse moléculaire moyenne en poids reste le plus souvent inférieure à 3 000 000 g/mol (et typiquement comprise entre 150 000 et 2 000 0000 g/mol). Dans le cadre d'une opération de cimentation, il est préférable que la masse moléculaire moyenne en poids du bloc long (B) reste inférieure à 1 000 000 g/mol, et avantageusement inférieure à 800 000 g/mol.

Dans le cadre de la présente invention, il a par ailleurs été mis en évidence, que, de façon surprenante, l'effet de contrôle du filtrat recherché est obtenu pour des blocs (B) ayant une masse moléculaire moyenne en poids plus faible que 100 000 g/mol. Ainsi, selon un mode de réalisation particulier, le bloc (B) a une masse moléculaire moyenne en poids comprise entre 10 000 et à 100 000 g/mol, de préférence d'au moins 20 000 g/mol, par exemple d'au moins 25 000 g/mol, cette masse moléculaire moyenne en poids pouvant typiquement être inférieure à 90 000, par exemple inférieure à 75 000, voire inférieure à 50 000.

Une estimation de la masse moléculaire moyenne en poids du bloc long (B) peut être mesurée par une chromatographie d'exclusion stérique et mesure de masse utilisant une calibration externe avec des étalons de polyoxyde d'éthylène (CES relative), ce qui conduit à une valeur légèrement majorée de la masse moléculaire moyenne en poids désignée dans la présente description par Mw(CES relative).
Cette Mw(CES relative) est typiquement mesurée dans les conditions suivantes :
Phase mobile :Mélange de 80% en masse d'eau désionisée additionnée de 0,1M NaNO3 et 20% en masse d'acetonitrile,.
Débit : 1 ml/min
Colonnes : Shodex OHpak SB 806 MHQ (3 colonnes de 30 cm)
Détection: Indice de réfraction (détecteur de concentration Agilent)
Concentration des échantillons: environ 0,5 % en masse de matière sèche dans la phase mobile
Injection: 100 µl
Référence interne: éthyleneglycol
Etalonnage : polyoxyde d'ethylene PEO

La Mw(CES relative) du bloc long (B) des polymères (P) utiles selon l'invention est en général supérieure ou égale à 125 000 g/mol de préférence supérieure ou égale à 150 000 g/mol, cette Mw(CES relative) étant typiquement entre 200 000 et 2 500 000 g/mol, notamment entre 250 000 et 2 000 000 g/mol. Selon un mode de réalisation plus particulier, elle peut être inférieure à 125 000 g/mol, par exemple comprise entre 12 500 et 100 000 g/mol.

Dans le cas d'un fluide (F) utilisé dans le cadre d'une opération de cimentation, la Mw(CES relative) du bloc long (B) des polymères (P) et typiquement (mais non limitativement) entre 25 000 et 900 000 g/mol, par exemple entre 250 000 et 900 000 g/mol.

En pratique, on mesure la Mw(CES relative) du polymère (P), qui, du fait de la faible masse du bloc (A) représente également une assez bonne approximation, majorée, de la masse moléculaire moyenne en masse du bloc (B). La Mw(CES relative) du polymère (P) est en général supérieure ou égale à 15 000 g/mol, et par exemple supérieure ou égale à 150 000 g/mol, de préférence supérieure ou égale à 200 000 g/mol, par exemple supérieure ou égale à 300 000 g/mol, notamment supérieur ou égale à 400 000 g/mol, cette Mw(CES relative) du polymère (P) étant typiquement entre 200 000 g/mol et 2 500 000 g/mol, notamment entre 250 000 g/mol et 2 000 000 g/mol. Elle est plus particulièrement entre 25 000 et 900 000 g/mol, par exemple entre 250 000 g/mol et 800 000 g/mol dans le cas d'un fluide (F) utilisé dans le cadre d'une opération de cimentation.

Dans le cadre de l'invention, où le fluide (F) est utilisé dans une opération de cimentation (coulis de ciment pétrolier, typiquement) :
- le bloc (B) est avantageusement un bloc de nature hydrophile, de préférence comprenant des unités U1 du type précité, notamment des unités diméthylacrylamide DMA, éventuellement, mais non nécessairement, en association avec des unités U2, notamment des unités acide acrylamidométhylpropanesulfonique (AMPS), éventuellement en tout ou partie sous forme de sulfonate, par exemple sous la forme de son sel de sodium.
   Selon un mode de réalisation particulier, le bloc (B) est constitué au moins majoritairement (par exemple essentiellement, voire exclusivement) par un mélange d'unités DMA et AMPS, avec un rapport molaire DMA/AMPS par exemple compris entre 60/40 et 90/10, notamment entre 75/25 et 85/15 et typiquement de l'ordre de 80/20.
- le bloc (B) a typiquement une masse moléculaire moyenne en poids comprise entre 150 000 et 750 000 g/mol, de préférence entre 200 000 et 700 000 g/mol. Alternativement, le bloc (B) peut avoir une masse moléculaire moyenne en poids comprise entre 15 000 et 150 000 g/mol, de préférence entre 20 000 et 100 000 g/mol.
- le bloc (B) a typiquement une Mw(GPC relative) comprise entre 200 000 et 800 000, de préférence entre 250 000 et 900 000 g/mol , par exemple 300 000 à 600 000 g/mol le polymère (P) ayant en général une Mw(CES relative) comprise dans ces gammes. Le bloc (B) peut alternativement avoir une Mw(GPC relative) comprise entre 20 000 et 200 000 , de préférence entre 25 000 et 180 000 g/mol , par exemple 30 000 et 150 000 g/mol, le polymère (P) ayant en général une Mw(CES relative) comprise dans ces gammes.

Le bloc long (B) employé est typiquement un bloc statistique DMA/AMPS, avec un ratio molaire DMA/AMPS entre 75/25 et 85/15 (typiquement de l'ordre de 80/20), et une Mw(GPC-MALS) comprise entre 20 000 et 7500 000, notamment entre 200 000 et 750 0000, par exemple entre 400 000 et 600 000.

### Les particules (p) et le bloc court (A)

La notion de « particule » au sens où elle est employée dans la présente description ne se cantonne pas à celle de particules individualisées. Elle désigne de façon plus générale des entités solides dispersables au sein d'un fluide, sous la forme d'objets (particules individuelles, agrégats ...) dont toutes les dimensions sont inférieures à 5 mm, de préférence à 2 mm, par exemple inférieures à 1 mm.

La nature des particules (p) et du bloc court (A) des polymères (P) utilisés selon la présente invention peuvent varier en une assez large mesure, sous réserve que le bloc (A) interagisse avec les particules (p) et conduise à une immobilisation, de préférence irréversible, de polymère (P) sur la surface des particules (p).

Pour ce faire, le bloc (A) comprend en général des unités monomères porteuses de groupements développant avec les particules (p) des interactions plus fortes que le bloc long (B).

Selon la présente invention, les particules (p) sont des particules minérales introduites au sein du fluide (F) ou avec lesquelles le fluide (F) entre en contact suite à son injection. Ces particules (p) sont des particules minérales choisies parmi les particules de ciment, de carbonate de calcium, d'argile, de barite, de silice, de sable ou de noir de carbone. Le bloc (A) est constitué au moins majoritairement (et de préférence essentiellement, voire exclusivement) par des unités monomères choisies dans les groupes préférentiels définis ci-après, à adapter au cas par cas en fonction de la nature des particules (p) :
- pour des particules (p) de carbonate de calcium ou de ciment :
   le bloc (A) peut notamment être constitué au moins majoritairement (et de préférence essentiellement, voire exclusivement) par :
      ▪ des unités monomères U5 du type précité, avantageusement présentes dans le bloc (A) ; et/ou
      ▪ des unités monomères U3 du type précité ; et/ou
      ▪ des unités monomères U6 porteuses de groupements phosphate, phosphonate ou phosphinate (sous forme d'acide libre et/ou sous forme saline), comme par exemple des unités phosphate de monoacryloxyéthyle, phosphate de bis(2-méthacryloxyéthyle), les unités monomères introduites en employant les Sipomer PAM 100, 200, 400 ou 5000 disponibles auprès de la société Solvay, l'acide vinylphosphonique, l'acide allylphosphonique, l'acide isopropylphosphonique, le phosphonate de diallyle aminométhylène et leurs sels.
   Le bloc (B) est alors typiquement constitué au moins majoritairement (et de préférence essentiellement, voire exclusivement) par des unités U1 et/ou U2 du type précité
- pour des particules (p) de silice ou de sable :
   le bloc (A) peut notamment être constitué au moins majoritairement (et de préférence essentiellement, voire exclusivement) par :
      ▪ des unités monomères U3 du type précité ; et/ou
      ▪ des unités monomères U4 du type précité ; et/ou
      ▪ des unités monomères U7 (méth)acrylate fonctionnalisé par des polydimethylsiloxanes comme le triméthylsiloxy PEG 4-5 methacrylate, ou le(3-trimethoxysilyl)propyl methacrylate
   Le bloc (B) est alors typiquement constitué au moins majoritairement (et de préférence essentiellement, voire exclusivement) par des unités U1 et/ou U2 et/ou U5 du type précité
- pour des particules (p) d'argile :
   le bloc (A) peut notamment être constitué au moins majoritairement (et de préférence essentiellement, voire exclusivement) par
      ▪ des unités monomères U4 du type précité ; et/ou
      ▪ des unités monomères U6 du type précité.
   Le bloc (B) est alors typiquement constitué au moins majoritairement (et de préférence essentiellement, voire exclusivement) par des unités U1 et/ou U2 du type précité
- pour des particules (p) de noir de carbone
   le bloc (A) peut notamment être constitué au moins majoritairement (et de préférence essentiellement, voire exclusivement) par des unités U8 hydrophobes, incluant notamment
   les esters d'acides mono ou di-carboxylique [alpha],[beta]-éthyléniquement insaturés avec des alcools en C1-C20, comme par exemple les méthyl (méth)acrylate, méthyl éthacrylate, éthyl (méth)acrylate, éthyl éthacrylate, n-propyl (méth)acrylate, isopropyl (méth)acrylate, n-butyl (méth)acrylate, sec-butyl (méth)acrylate, tert-butyl (méth)acrylate, tert-butyl éthacrylate, n-hexyl (méth)acrylate, n-heptyl (méth)acrylate, n-octyl (méth)acrylate, 1,1,3,3-tetraméthylbutyl (méth)acrylate, éthylhexyl (méth)acrylate, n-nonyl (méth)acrylate, n-decyl (méth)acrylate, n-undecyl (méth)acrylate, tridecyl(méth)acrylate, myristyl (méth)acrylate, pentadecyl (méth)acrylate, palmityl (méth)acrylate, heptadecyl (méth)acrylate, nonadecyl (méth)acrylate, arachinyl (méth)acrylate, béhényl (méth)acrylate, lignoceryl (méth)acrylate, cérotinyl (méth)acrylate, mélissinyl (méth)acrylate, palmitoléoyl (meth)acrylate, oléyl (méth)acrylate, linoléyl (méth)acrylate, linolényl (méth)acrylate, stéaryl (méth)acrylate, lauryl (méth)acrylate, les mono, di or tristyryl phényl (meth)acrylates éventuellement éthoxylés entre les groupes aromatique et méthacrylate ; et/ou
      - les unités monomères vinylaromatiques comme le styrène, le 2-méthylstyrène, 4-méthylstyrène, 2-(n-butyl)styrène, 4-(n-butyl)styrène, 4-(n-decyl)styrène
      - les unités monomères fluorées, comme les (méth)acrylates d'alkyle perfluorés ou hautement fluorés.
   Le bloc (B) est alors typiquement constitué au moins majoritairement (et de préférence essentiellement, voire exclusivement) par des unités des unités U1 et/ou U2 et/ou U5 du type précité

Quelle que soit sa nature chimique, le bloc court (A) présent dans les polymères employés selon la présente invention a, en général, une masse moléculaire moyenne en poids entre 500 et 30 000 g/mol, par exemple entre 1000 et 25 000 g/mol et ce notamment lorsque le bloc (A) est de l'un des types précités.

Selon un mode de réalisation particulièrement intéressant, employé lorsque les particules (p) sont des particules de ciment ou de carbonate de calcium, le bloc court (A) est un bloc homopolymère poly(acide acrylique) de masse moléculaire moyenne en poids allant de 1 000 à 20 000 g/mol.

La masse moléculaire en poids du bloc court (A) peut être mesurée notamment par une chromatographie par perméation de gel suivie d'une analyse par diffusion de la lumière multiangle (GPC-MALS)

### Les polymères (P)

Les polymères utiles selon la présente invention sont des polymères particuliers, qui comprennent au moins deux blocs de taille très différente, incluant un bloc (B) de taille élevée.

Les polymères (P) sont de préférence préparés par polymérisation radicalaire contrôlée, ce qui permet de contrôler finement la taille des deux blocs.

La technique de polymérisation radicalaire contrôlée est une technique bien connue en soi, qui permet, à l'aide d'agent de contrôle de la polymérisation, d'obtenir des polymères de masses contrôlées et notamment des polymères séquencés dont on peut contrôler à la fois l'architecture et la taille de chacun des blocs.

Des procédés de polymérisation radicalaire contrôlée bien adaptés pour la synthèse des polymères (P) utiles selon l'invention sont les procédés dit RAFT ou MADIX, qui mettent typiquement en oeuvre un procédé de transfert réversible par addition-fragmentation employant des agents de contrôle (dits également de transfert réversible), par exemple de type xanthate (composés porteurs de fonctions -SC=SO-). A titre d'exemples de tels procédés, il peut notamment être fait mention de ceux décrits dans WO96/30421, WO 98/01478, WO 99/35178, WO 98/58974, WO 00/75207, WO 01/42312, WO 99/35177, WO 99/31144, FR2794464 ou WO 02/26836.

Ces procédés dits de « polymérisation radicalaire contrôlée » conduisent de façon bien connue à la formation de chaînes polymères qui croissent sensiblement toutes à la même vitesse, ce qui se traduit par une augmentation sensiblement linéaire des masses moléculaires avec la conversion et une distribution des masses resserrée, avec un nombre de chaînes qui reste typiquement sensiblement fixe pendant toute la durée de la réaction, ce qui permet de contrôler très aisément la masse molaire moyenne du polymère synthétisé (le rapport initial monomère/agent de contrôle définit le degré de polymérisation obtenu pour les chaînes synthétisé). Les chaînes obtenues présentent par ailleurs en général un caractère « vivant » : elles présentent en bout de chaîne le groupement réactif présent sur l'agent de contrôle. On peut de ce fait poursuivre la polymérisation sur la chaîne polymère obtenue, en conservant le caractère contrôlé de la polymérisation, ce qui peut notamment être utilisé pour synthétiser à l'extrémité d'un premier bloc polymère de taille contrôlée un autre bloc de composition différente et également de taille contrôlée .

Dans ce cadre, les polymères (P) utiles selon l'invention peuvent être des polymères du type préparés selon un procédé comprenant les étapes suivantes :
(E1) on synthétise le bloc (A) -ou plus rarement le bloc (B)- des polymères (P) en mettant en contact en milieu aqueux :
   - les monomères éthyléniquement insaturés, identiques ou différents choisis pour la constitution du bloc (A) - respectivement du bloc (B) - ;
   - une source de radicaux libres adaptée à la polymérisation desdits monomères; et
   - un agent de contrôle de la polymérisation radicalaire, de préférence comprenant un groupe thiocarbonylthio -S(C=S)- ;
(E2) on synthétise le bloc (B) - respectivement le bloc (A) - à l'extrémité du bloc (A) - respectivement à l'extrémité du bloc (B) - formé dans l'étape (1) en mettant en contact
   - les monomères éthyléniquement insaturés, identiques ou différents, choisis pour la constitution du bloc (B) - respectivement du bloc (A) -;
   - une source de radicaux libres adaptée à la polymérisation desdits monomères; et
   - le polymère obtenu à l'issue de l'étape (E1), qui joue le rôle d'agent de contrôle de la polymérisation radicalaire et sur lequel se greffe le bloc (B) -respectivement le bloc (A).

Dans chacune des étapes (E1) et (E2), la taille du bloc polymère en formation est contrôlée par le rapport molaire monomère/agent de contrôle correspondant à la quantité initiale de monomères rapportée à la quantité d'agent de contrôle : schématiquement, toutes les châines croissent à partir de chacun des agents de contrôle présent et les monomères se répartissent de façon homogène sur toutes les chaînes en croissance. Le rapport molaire monomère/agent de contrôle dicte de ce fait le degré de polymérisation du bloc synthétisé dans chacune des étapes, et permet donc de définir la masse moléculaire moyenne en nombre théorique attendue pour chacun des blocs.

Typiquement, les rapports molaire monomère/agent de contrôle dans les étapes (E1) et (E2) sont choisis de façon à ce que :
- La masse moléculaire moyenne en nombre théorique du bloc (A) est comprise entre 250 et 25 000 g/mol, de préférence entre 500 et 15 000 g/mol, notamment entre 1 000 et 10000g/mol.
- La masse moléculaire moyenne en nombre théorique du bloc (B) est comprise entre 70 000 et 5 000 000 g/mol, de préférence entre 80 000 et 3 000 000 g/mol, notamment entre 90 000 et 2 000 000 g/mol. Cette masse moléculaire moyenne en nombre théorique du bloc (B) est plus préférentiellement entre 90 000 et 1 000 000 g/mol, avantageusement entre 100 000 et 500 000 g/mol.

Le bloc (B) peut avantageusement être préparé dans l'étape (E2) en mettant en contact :
- les monomères éthyléniquement insaturés, identiques ou différents, choisis pour la constitution du bloc (B) ;
- une source de radicaux libres adaptée à la polymérisation desdits monomères; et
- le bloc (A) préparé selon l'étape (E1) précitée, qui joue le rôle d'agent de contrôle de la polymérisation radicalaire, de préférence comprenant un groupe thiocarbonylthio - S(C=S)-, et sur lequel se greffe le bloc (B)
avec une concentration en monomères au sein du milieu réactionnel de l'étape (E) qui est suffisamment élevée pour induire la gélification du milieu si la polymérisation était conduite en l'absence de l'agent de contrôle.

Cette technique de polymérisation permet d'accéder à des blocs (B) de taille élevée. Avantageusement, la synthèse du bloc (B) peut être réalisée dans les conditions de polymérisation décrites dans la demande WO 2012/042167.

Alternativement, lorsque le bloc (B) est hydrophile, le bloc (B) peut être synthétisé: en mettant en contact, au sein d'un milieu aqueux (M) dans lequel le bloc (B) formé n'est pas soluble :
- les monomères éthyléniquement insaturés, identiques ou différents, choisis pour la constitution du bloc (B), choisis solubles dans le milieu aqueux (M)
- au moins une source de radicaux libres ; et
- un stabilisant réactif qui comprend :
   - une chaîne polymère (CP) soluble dans le milieu (M)
   - un groupe (G) assurant un caractère vivant et contrôlé à la polymérisation radicalaire de l'étape (E), tel que, par exemple, un groupe porteur d'un groupe thiocarbonylthio -S(C=S)-

De façon générale, les conditions à mettre en œuvre dans les étapes de polymérisation précitées peuvent être celles typiquement mises en œuvre dans les polymérisations radicalaires contrôlées.

En particulier, on peut utiliser dans l'étape (E) du procédé de l'invention toute source de radicaux libres connue en soi. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Notamment dans le cas de polymérisation effectuées en milieu aqueux, il peut d'utiliser un amorceur radicalaire de type redox, qui présente l'avantage de ne pas nécessiter un chauffage du milieu réactionnel (pas d'amorçage thermique), ce qui permet de mieux gérer encore l'exothermie de la réaction.

Ainsi, la source de radicaux libres employée peut typiquement être choisie parmi les amorceurs redox classiquement utilisés en polymérisation radicalaire, typiquement ne nécessitant pas de chauffage pour leur amorçage thermique. Il s'agit typiquement d'un mélange d'au moins un agent oxydant avec au moins un agent réducteur.

L'agent oxydant présent dans le système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :
- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple) ,
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) par exemple l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA.

La nature de l'agent de contrôle mis en œuvre dans les étapes de synthèse des blocs (A) et (B) peut quant à elle varier en une large mesure.

Selon une variante intéressante, l'agent de contrôle utilisé est un composé porteur d'un groupe thiocarbonylthio -S(C=S)-. Selon un mode de réalisation particulier, l'agent de contrôle peut être porteur de plusieurs groupes thiocarbonylthio.

Il peut éventuellement s'agir d'une chaîne polymère porteuse d'un tel groupe. Ainsi, l'agent de contrôle employé dans l'étape (E2) est un polymère vivant issu de l'étape (E1). On peut de même envisager que l'agent de contrôle de l'étape (E1) soit issu d'une étape (E0) préalable dans laquelle on a réalisé la polymérisation radicalaire d'une composition comprenant :
- des monomères éthyléniquement insaturés ;
- un agent de contrôle de la polymérisation radicalaire comprenant au moins un groupe thiocarbonylthio -S(C=S)- ; et
- un amorceur de la polymérisation radicalaire (source de radicaux libres).

Plus généralement, un agent de contrôle adapté à la synthèse du polymère (P) utile selon l'invention répond avantageusement à la formule (A) ci-dessous : 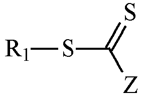 dans laquelle :
- Z représente :
   . un atome d'hydrogène,
   . un atome de Chlore,
   . un radical alkyl éventuellement substitué, aryl éventuellement substitué,
   . un hétérocycle éventuellement substitué,
   . un radical alkylthio éventuellement substitué,
   . un radical arylthio éventuellement substitué,
   . un radical alkoxy éventuellement substitué,
   . un radical aryloxy éventuellement substitué,
   . un radical amino éventuellement substitué,
   . un radical hydrazine éventuellement substitué,
   . un radical alkoxycarbonyl éventuellement substitué,
   . un radical aryloxycarbonyl éventuellement substitué,
   . un radical carboxy, acyloxy éventuellement substitué,
   . un radical aroyloxy éventuellement substitué,
   . un radical carbamoyle éventuellement substitué,
   . un radical cyano,
   . un radical dialkyl- ou diaryl-phosphonato,
   . un radical dialkyl-phosphinato ou diaryl-phosphinato, ou
   . une chaîne polymère,
   et
- R₁ représente :
   . un groupe alkyle, acyle, aryle, aralkyle, alcène ou alcyne éventuellement substitué,
   . un cycle carboné ou un hétérocycle, saturé ou non, aromatique éventuellement substitué, ou
   . une chaîne polymère.

Les groupes R₁ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Dans le cadre de la présente invention, il est notamment intéressant d'employer à titre d'agents de contrôle des xanthates, des trithiocarbonates, des dithiocarbamates, ou des dithiocarbazates.

Avantageusement, on utilise comme agent de contrôle des composés porteurs d'une fonction xanthate -S(C=S)O-, par exemple porteur d'une fonction O-ethyl xanthate de formule -S(C=S)OCH₂CH₃, comme par exemple le O-ethyl-S-(1-methoxycarbonyl ethyl) xanthate de formule (CH₃CH(CO₂CH₃))S(C=S)OEt.

Un autre agent de contrôle possible dans l'étape (E) est le dibenzyltrithiocarbonate de formule PhCH₂S(C=S)SCH₂Ph (où Ph=phényle).

Les polymères (P) utiles selon l'invention comprennent en général uniquement les blocs (B) et (A). Il s'agit typiquement de polymères dibloc (A)-(B), mais des polymères comportant davantage de blocs sont envisageables, notamment des copolymères comportant un bloc long (B) sur lequel sont greffés deux blocs courts ou plus (polymères triblocs de type (A)-(B)-(A) notamment), ou bien encore des copolymères comprenant un bloc espaceur entre le bloc (B) et le bloc (A).

Certains des polymères utiles selon la présente invention sont des polymères qui, à la connaissance des inventeurs n'ont jamais été décrits par le passé.

Ces polymères comprennent en particulier les polymères séquencés contenant, de préférence à titre d'uniques blocs :
- au moins un premier bloc pAA au moins majoritairement (et de préférence essentiellement, voire exclusivement) constitué par des unités acide acrylique, de masse moléculaire moyenne en poids entre 500 et 30 000 g/mol, notamment entre 1 000 et 20 000; et
- un deuxième bloc p(DMA/AMPS) au moins majoritairement (et de préférence essentiellement, voire exclusivement) constitué par un mélange statistique d'unités DMA et AMPS, avec un rapport molaire DMA/AMPS compris entre 60/40 et 90/10, de masse moléculaire en poids supérieure à 150 000 g/mol, typiquement entre 200 000 et 2 000 000 g/mol et notamment entre 250 000 et 750 000 g/mol.

Ces polymères constituent un objet particulier de la présente invention, ainsi que
- les coulis de ciment pétrolier les comprenant
- les fluides aqueux pour injection sous pression au sein d'une roche pétrolière, notamment les fluides de forage et fluides de fracturation, les comprenant en association avec des particules minérales, ainsi que les blends pour la préparation de ces fluides.

### Applications pratiques

Les polymères décrits *vide supra* peuvent être employés dans la quasi-totalité des fluides aqueux mis en oeuvre en extraction pétrolière et potentiellement sujet à la perte de fluide.

Dans le cadre de l'invention, le fluide (F) est un coulis de ciment pétrolier, qui comprend le polymère (P) comme additif. Dans ce cas, le polymère (P), associé aux particules présentes dans ciment, assure l'effet de contrôle du filtrat lors de la cimentation.

Les concentrations en polymère et particules à employer dans le fluide (F) sont à adapter au cas par cas en fonction de l'application visée et de la rhéologie recherchée.

Différents aspects et avantages de l'invention seront encore illustrés par les exemples ci-après dans lesquels des polymères ont été préparés selon le procédé de l'invention.

### Exemple 1 :

### Synthèse de copolymères diblocs poly(acide acrylique)-b-poly(N,N-dimethylacrylamide-co-AMPS)

### 1.1: Synthèse de blocs poly(acide acrylique) vivant à terminaison xanthate (blocs courts A1 à A4)

Dans un ballon de 250 mL à température ambiante, on a introduit 30 g d'acide acrylique, dans un solvant aqueux(à savoir 70 g d'eau distillée pour les blocs A1-A3 - un mélange de 35 g d'eau distillée et 28 g d'éthanol pour le blocs A4), et du O-ethyl-S-(1-methoxycarbonyl ethyl) xanthate de formule (CH₃CH(CO₂CH₃))S(C=S)OEt (dans les quantités indiquées donné dans le Tableau 1 ci-dessous, où est également indiqué la valeur de la masse moléculaire ne nombre théorique attendue (Mₙ, th) calculée par le rapport de la quantité de monomère à la quantité de xanthate) et 312 mg de 2,2'-Azobis(2-methylpropionamidine)di chlorhydrate. Le mélange a été dégazé par bullage d'azote pendant 20 minutes.

Le ballon a ensuite été placé dans un bain d'huile thermostaté à 60°C, et le milieu réactionnel a été laissé sous agitation pendant 4 heures à 60°C.

A l'issue de ces quatre heures, la conversion a été déterminée par RMN ¹H.

Une analyse en chromatographie d'exclusion stérique dans un mélange de l'eau et de l'acétonitrile (80/20) additivé de NaNO₃ (0,1N) avec un détecteur MALLS dix-huit angles et fournit les valeurs de masse molaire moyenne en poids (M_{w}) et d'indice de polymolécularité (M_{w}/Mₙ) reporté dans le tableau 1 ci-dessous.

**Tableau 1: blocs A1-A4**

| **Bloc synthétisé** | **Mₙ,th (g/mol)** | **Xanthate (g)** | **Conversion (RMN ¹H)** | **M_{w} (g/mol)** | **M_{w}/Mₙ** |
|---|---|---|---|---|---|
| **A1** | 10000 | 0,624 | 99,5% | 22000 | 1,8 |
| **A2** | 5000 | 1,25 | 99,7% | 10000 | 1,7 |
| **A3** | 2500 | 2,50 | 99,6% | 5000 | 1,7 |
| **A4** | 1000 | 6,24 | >99,9% | 2100 | 1,8 |

### 1.2 : Synthèse de copolymères dibloc à partir des blocs A1 à A4

### Polymères P1 à P17

Les blocs A1 à A4 préparés comme indiqués dans le paragraphe 1.1 ont été employés dans leur milieu réactionnel obtenu, sans purification, avec une masse de polymère m_{A} reportée dans le tableau 2 ci-dessous. Le bloc choisi, dans son mélange réactionnel sans purification, a été introduit dans un ballon de 250 mL, à température ambiante, puis on a ajouté (dans des quantités reportées dans le tableau 2 ci-dessous) du N,N-diméthylacrylamide DMA, une solution aqueuse d'AMPS à 50% massique (25% par rapport molaire au quantité de N,N-diméthylacrylamide), et de l'eau distillée, avec un extrait sec final d'environ 20% massique, et du persulfate d'ammonium en solution aqueuse à 5,0 % en masse.

Le mélange a été dégazé par bullage d'azote pendant 20 minutes. On a ajouté au milieu du formaldéhyde sulfoxylate de sodium, sous forme d'une solution aqueuse à 1,0 % en masse, la même masse de cette solution étant introduite que celle de la solution de persulfate d'ammonium (voir Tableau 2).

On a laissé la réaction de polymérisation se dérouler sans agitation pendant 24 heures à température ambiante (20°C).

A l'issue des 24 heures de réaction, on a mesuré la conversion par RMN ¹H (résultats dans le tableau 3).

Une analyse en chromatographie d'exclusion stérique dans un mélange de l'eau et de l'acétonitrile (80/20 v/v) additivé de NaNO₃ (0,1N) avec un détecteur indice de réfraction fournit les valeurs de masse molaire moyenne en nombre (Mₙ) et d'indice de polymolécularité (M_{w}/Mₙ) qui sont répertoriés dans le Tableau 3:

**Tableau 2: polymères P1 à P17 : quantités de réactifs employés lors de la synthèse**

| **Polymère synthétisé** | **Bloc court** | | **m_{DMA}** (g) | **m_{AMPS}** (g) | **mₑₐᵤ** (g) | **m_{persulf}** (g) | **m_{fss}** (g) |
|---|---|---|---|---|---|---|---|
| | **m**_{A} (g) | | | | | | |
| **P1** | **A1** | 0,835 | 15,3 | 17,7 | 75,6 | 6,0 | 6,0 |
| **P2** | **A1** | 1,65 | 15,2 | 17,6 | 75,7 | 6,0 | 6,0 |
| **P3** | **A1** | 1,65 | 6,16 | 7,12 | 29,1 | 3,0 | 3,0 |
| **P4** | **A1** | 2,68 | 5,06 | 5,85 | 25,4 | 3,0 | 3,0 |
| **P5** | **A1** | 3,99 | 5,60 | 6,47 | 27,9 | 3,0 | 3,0 |
| **P6** | **A1** | 5,51 | 5,19 | 6,00 | 27,3 | 3,0 | 3,0 |
| **P7** | **A2** | 0,426 | 15,2 | 17,6 | 75,6 | 6,0 | 6,0 |
| **P8** | **A2** | 0,847 | 15,2 | 17,6 | 75,6 | 6,1 | 6,3 |
| **P9** | **A2** | 0,840 | 6,28 | 7,27 | 29,6 | 3,0 | 3,0 |
| **P10** | **A2** | 1,59 | 5,93 | 6,86 | 29,6 | 3,0 | 3,0 |
| **P11** | **A2** | 2,13 | 5,98 | 6,91 | 29,0 | 3,0 | 3,0 |
| **P12** | **A2** | 3,05 | 5,67 | 6,55 | 28,8 | 3,0 | 3,0 |
| **P13** | **A3** | 0,703 | 25,6 | 29,6 | 138,1 | 3,0 | 3,0 |
| **P14** | **A3** | 1,74 | 25,3 | 29,3 | 137,6 | 3,0 | 3,0 |
| **P15** | **A4** | 0,177 | 31,7 | 36,6 | 157,5 | 12,0 | 12,0 |
| **P16** | **A4** | 0,287 | 25,6 | 29,6 | 139 | 3,0 | 3,0 |
| **P17** | **A4** | 0,709 | 25,3 | 29,3 | 138,7 | 3,0 | 3,0 |
| **P18** | **A4** | 5,33 | 25,3 | 29,3 | 138,7 | 0,5 | 0,5 |

| | | | | | | | |
|---|---|---|---|---|---|---|---|
| **mₑₐᵤ** : masse de l'eau distillée ajoutée, à l'exclusion de l'eau ajoutée dans les autres solution **m_{persulf}** : masse de la solution aqueuse à 5% massique d'ammonium persulfate ajoutée **m_{fss}** : masse de la solution aqueuse à 1% massique de formaldéhyde sulfoxylate de sodium | | | | | | | |

**Tableau 3 : polymères P1 à P17**

| **Polymère synthétisé** | **Bloc court** | Conversion | | **M_{w}** (kg/mol) | **M_{w}/Mₙ** |
|---|---|---|---|---|---|
| | | DMA | AMPS | | |
| **P1** | **A1** | 99,4% | 98,0% | 620 | 5,2 |
| **P2** | **A1** | 99,7% | 99,2% | 420 | 3,2 |
| **P3** | **A1** | >99,9% | >99,9% | | |
| **P4** | **A1** | >99,9% | >99,9% | | |
| **P5** | **A1** | >99,9% | >99,9% | | |
| **P6** | **A1** | >99,9% | >99,9% | | |
| **P7** | **A2** | 99,6% | 99,8% | 600 | 3,0 |
| **P8** | **A2** | 99,8% | 99,2% | 390 | 3,3 |
| **P9** | **A2** | >99,9% | >99,9% | | |
| **P10** | **A2** | >99,9% | >99,9% | | |
| **P11** | **A2** | >99,9% | >99,9% | | |
| **P12** | **A2** | >99,9% | >99,9% | | |
| **P13** | **A3** | 99,7% | 98,7% | 450 | 2,3 |
| **P14** | **A3** | >99,9% | >99,9% | 210 | 1,9 |
| **P15** | **A4** | 99,4% | 99,6% | 760 | 2,5 |
| **P16** | **A4** | 99,8% | 99,5% | 410 | 2 |
| **P17** | **A4** | 99,7% | 99,4% | 180 | 1,9 |
| **P18** | **A4** | >99% | >99% | 47,5 | 1,5 |

### Exemple 2 (comparatif) :

### Synthèse d'un polymère monobloc poly(N,N-dimethylacrylamide-co-AMPS)

Dans ballon de 250 mL à température ambiante, on a introduit 15,3 g de N,N-diméthylacrylamide, 18 g d'AMPS, 75,6 g d'eau distillée, 1,03 g d'une solution éthanolique à 1% massique de O-ethyl-S-(1-methoxycarbonyl ethyl) xanthate de formule (CH₃CH(CO₂CH₃))S(C=S)OEt et 6,0 g d'une solution aqueuse à 5% massique de persulfate d'ammonium. Le mélange a été dégazé par bullage d'azote pendant 20 minutes.

On a ensuite ajouté 6,0 g d'une solution aqueuse à 1% massique de formaldéhyde sulfoxylate de sodium. Les deux solutions aqueuses de persulfate d'ammonium et formaldéhyde sulfoxylate de sodium ont été préalablement dégazées par bullage d'azote. On a alors laissé la réaction de polymérisation se dérouler sans agitation pendant 24 heures à température ambiante (20°C).

A l'issue des 24 heures de réaction, on a obtenu une conversion de 99,8% en N,N-diméthylacrylamide et de 99,6% en AMPS, telle que déterminée par RMN ¹H.

Une analyse en chromatographie d'exclusion stérique dans l'eau additivé de NaNO₃ (0,1N) avec un détecteur indice de réfraction fournit les valeurs de masse molaire moyenne en nombre (Mₙ) et d'indice de polymolécularité (M_{w}/Mₙ) suivants (relative aux étalons PEO):
M_{w}= 1 070 000 g/mol
M_{w}/Mₙ = 2,8.

### Exemple 3

### Evaluation de polymère dibloc en association avec un latex dans des coulis de ciment

Le polymère dibloc P13 préparés dans l'exemple 1 et séché par évaporation sur plateau est utilisé sous forme de poudre en combinaison avec un latex styrène butadiène pour réaliser des coulis de ciment pétrolier ayant les formulations suivantes en grammes :

| | 3-1 | 3-2 | 3-3 | 3-4 | 3-5 | 3-6 |
|---|---|---|---|---|---|---|
| Latex (g) | 103,9 | 86,6 | 69,24 | 0 | 0 | 69,2 |
| dibloc P13 (g) | 0 | 0 | 0 | 3,9 | 2,34 | 2,34 |
| dispersant (polymelamine sulfonate) (g) | 1,95 | 1,17 | 1,56 | 0 | 1,56 | 1,17 |
| retardateur (lignosulfonate de calcium) (g) | 0,39 | 0,39 | 0,39 | 0,78 | 0,78 | 0,39 |
| antimousse organique (g) | 1,38 | 1,38 | 1,38 | 1,38 | 1,38 | 1,38 |
| eau de ville (g) | 245 | 262 | 278,9 | 344,8 | 345,5 | 277,8 |
| Ciment (g) | 780 | 780 | 780 | 780 | 780 | 780 |

Le latex est ajouté à l'eau de ville et aux additifs liquides et à l'eau de ville. Les dibloc et les additifs solides sont mélangés au ciment avant incorporation dans le liquide.

La formulation et le conditionnement et le test de filtration ont été réalisés selon la norme de l'American Petroleum Institute (API recommended practice for testing well cements 10B, 2nd edition April 2013).

Après mélange et dispersion de l'ensemble des constituants de la formulation, le coulis obtenu a été conditionné à 88°C pendant 20 minutes dans un consistomètre atmosphérique (modèle 1250 fourni par Chandler Engineering Inc.) préalablement stabilisé à cette température, ce qui permet de simuler les conditions subies par le coulis de ciment lors de la descente dans un puits.

La performance en contrôle de filtrat a été déterminée par une filtration statique à 88°C dans une cellule double ouverture de capacité 175mL équipée de grille métallique 325mesh (45µm) (fourni par OFITE Inc., référence 170-45). Les tests de contrôle de migration de gaz sont réalisés sur un « gas migration tester » Model 120-57 fourni par OFITE. Le principe de cet appareil consiste à laisser le coulis de ciment prendre sous pression lors d'une filtration prolongée. Si aucun gaz ne diffuse à travers la cellule, le coulis est considéré imperméable à la migration de gaz.

Les performances des polymères dans les formulations de ciment sont reportées dans le tableau ci-dessous :

| formulation N° | 3-1 | 3-2 | 3-3 | 3-4 | 3-5 | 3-6 |
|---|---|---|---|---|---|---|
| fluid loss V API (ml) | 85 | 400 | 381 | 80 | 121 | 39 |
| contrôle de migration de gaz | oui | non | non | non | non | oui |

Ces résultats montrent qu'une combinaison de latex et de polymère dibloc peux être avantageusement être utilisée pour contrôler à la fois le filtrat et la migration de gaz avec une concentration en latex et en dibloc fortement réduites par rapport à l'utilisation de chacun de ces additifs utilisés seuls.

### Exemple 4

### Evaluation de polymère dibloc en association avec des particules de silice dans des coulis de ciment

Le polymère dibloc P13 préparés dans l'exemple 1 et séché par évaporation sur plateau est utilisé sous forme de poudre en combinaison avec une fumée de silice (fournie par Condensil grade 95ND) pour réaliser des coulis de ciment pétrolier ayant les formulations suivantes en grammes :

| | 4-1 | 4-2 | 4-3 |
|---|---|---|---|
| fumée de silice (g) | 39 | 0 | 35,9 |
| dibloc P13 (g) | 0 | 3,12 | 3,12 |
| dispersant (polymelamine sulfonate) (g) | 2,34 | 0,59 | 0,78 |
| retardateur (lignosulfonate de calcium) (g) | 0,78 | 0,78 | 0,78 |
| antimousse organique (g) | 1,38 | 1,38 | 1,38 |
| eau de ville (g) | | 345,1 | 350,2 |
| Ciment (g) | 780 | 780 | 780 |

| | 4-4 | 4-5 |
|---|---|---|
| fumée de silice (g) | 22,1 | 27,63 |
| dibloc P13 (g) | 3,9 | 4,88 |
| agent de suspension hydroxy ethyl cellulose (g) | 0,325 | 0,325 |
| retardateur (lignosulfonate de sodium) (g) | 3,25 | 5,85 |
| antimousse organique (g) | 1,4 | 1,4 |
| eau de ville (g) | 365,8 | 366,1 |
| Ciment (g) | 650 | 650 |
| farine de silice | 227,5 | 227,5 |

Le fumée de silice est ajouté à l'eau de ville et aux additifs liquides et à l'eau de ville. Les dibloc et les additifs solides sont mélangés au ciment avant incorporation dans le liquide.

La formulation et le conditionnement et le test de filtration ont été réalisés selon la norme de l'American Petroleum Institute (API recommended practice for testing well cements 10B, 2nd edition April 2013).

Après mélange et dispersion de l'ensemble des constituants de la formulation, le coulis obtenu a été conditionné à 88°C pendant 20 minutes dans un consistomètre atmosphérique (modèle 1250 fourni par Chandler Engineering Inc.) préalablement stabilisé à cette température, ce qui permet de simuler les conditions subies par le coulis de ciment lors de la descente dans un puits.

La performance en contrôle de filtrat a été déterminée par une filtration statique à 88°C (pour les formulations 4-1, 4-2 et 4-3), à 120°C (pour la formulation 4-4) et à 150°C pour la formulation 4-5) dans une cellule double ouverture de capacité 175mL équipée de grille métallique 325mesh (45µm) (fourni par OFITE Inc., référence 170-45). Les tests de contrôle de migration de gaz sont réalisés sur un « gas migration tester » Model 120-57 fourni par OFITE. Le principe de cet appareil consiste à laisser le coulis de ciment prendre sous pression lors d'une filtration prolongée. Si aucun gaz ne diffuse à travers la cellule, le coulis est considéré imperméable à la migration de gaz.

Les performances des polymères dans les formulations de ciment sont reportées dans le tableau ci-dessous :

| formulation N° | 4-1 | 4-2 | 4-3 | 4-4 | 4-5 |
|---|---|---|---|---|---|
| température (°C) | 88 | 88 | 88 | 120 | 150 |
| fluid loss V API | 400 | 80 | 46 | 15 | 14 |
| contrôle de migration de gaz | non | non | oui | oui | oui |

Ces résultats montrent qu'une combinaison de latex et de polymère dibloc peux être avantageusement être utilisée pour contrôler à la fois le filtrat et la migration en combinaison avec une dispersion de fumée de silice

## Revendications

1. Utilisation d'une association comprenant un polymère séquencé (P) et des particules propres à assurer un effet barrière de gaz à titre d'agent de contrôle du filtrat et de la migration de gaz dans un fluide (F) injecté sous pression dans une formation souterraine,
dans laquelle ledit fluide (F) est aqueux et comprend des particules solides (p) et/ou est mis en contact avec des particules solides (p) au sein de la formation souterraine suite à son injection, ledit fluide (F) étant un coulis de ciment pétrolier, qui comprend le polymère séquencé (P) en tant qu'additif,
dans laquelle les particules solides (p) sont des particules minérales choisies parmi les particules de ciment, de carbonate de calcium, d'argile, de barite, de silice, de sable ou de noir de carbone,
dans laquelle
(i) le polymère séquencé (P) comprend :
- un premier bloc (A) qui s'adsorbe sur au moins une partie des particules solides (p); et
- un deuxième bloc (B), de composition distincte de celle dudit premier bloc (A), de masse moléculaire moyenne en poids supérieure à 10 000 g/mol et soluble dans le fluide (F),
(ii) les particules propres à assurer un effet barrière de gaz sont un latex ou des particules de silice,
- le latex est sous la forme d'une suspension contenant de 35 à 60 % en poids de latex sec, et la quantité de latex sec est de 1,5 à 6% massique par rapport à la quantité de particules solides (p) contenues dans le fluide (F), et
- la quantité de silice est de 1,5 à 6% massique par rapport à la quantité de particules solides (p) contenues dans le fluide (F) ; et
dans laquelle le premier bloc (A) est constitué au moins majoritairement par des unités monomères choisies dans les groupes préférentiels définis ci-après, en fonction de la nature des particules solides (p) :
• pour des particules solides (p) de carbonate de calcium ou de ciment :
le bloc (A) est constitué au moins majoritairement par :
- des unités monomères U5, à savoir des unités monomères acrylate, porteuses de groupement COOH ou COO⁻ ; et/ou
- des unités monomères U3, à savoir des unités monomères neutres incluant les esters d'acides mono- ou di- carboxyliques [alpha],[beta]-éthyléniquement insaturés avec des alcanediols en C2-C30 ou des polyéthylèneglycols, et les acrylate de tétrahydrofurfuryle, de vinyl acétamide, vinyl pyrrolidone, N-vinyl pipéridone, N-vinyl caprolactame, N-vinyl-5-methyl-2-pyrrolidone, N-vinyl-5-éthyl-2-pyrrolidone, N-vinyl-6-méthyl-2-pipéridone, N-vinyl-6-éthyl-2-pipéridone, N-vinyl-7-méthyl-2-caprolactame, N-vinyl-7-éthyl-2-caprolactame ; et/ou
- des unités monomères U6 porteuses de groupements phosphate, phosphonate ou phosphinate sous forme d'acide libre et/ou sous forme saline ;
• pour des particules solides (p) de silice ou de sable :
le bloc (A) est constitué au moins majoritairement par :
- des unités monomères U3 du type précité ; et/ou
- des unités monomères U4, à savoir des unités monomères porteuses de groupements ammonium, incluant les amides d'acides mono- ou di- carboxyliques [alpha],[beta]-éthyléniquement insaturés avec des diamines ayant au moins un groupe amine primaire ou secondaire ; les N,N-diallylamines et N,N-diallyl-N-alkylamines ; et/ou
- des unités monomères U7 incluant un (méth)acrylate fonctionnalisé par des polydiméthylsiloxanes ;
• pour des particules solides (p) d'argile :
le bloc (A) est constitué au moins majoritairement par :
- des unités monomères U4 du type précité ; et/ou
- des unités monomères U6 du type précité ;
• pour des particules solides (p) de noir de carbone :
le bloc (A) est constitué au moins majoritairement par des unités monomères U8 hydrophobes, incluant :
- les esters d'acides mono- ou di- carboxyliques [alpha],[beta]-éthyléniquement insaturés avec des alcools en C1-C20 ; et/ou
- les unités monomères vinylaromatiques ; et/ou
- les unités monomères fluorées.

2. Utilisation selon la revendication 1, dans laquelle le latex est sous la forme d'une suspension contenant de 40 à 50% en poids de latex sec.

3. Utilisation selon la revendication 1, dans laquelle le latex est en styrène-butadiène.

4. Utilisation selon la revendication 3, dans laquelle le rapport pondéral styrène-butadiène est compris entre 30 :70 et 70 :30.

5. Utilisation selon la revendication 2, dans laquelle le ratio de concentration massique du polymère (P) par rapport à celle du latex sec est compris entre 4 et 8%.

6. Utilisation selon la revendication 1, dans laquelle les particules de silice propres à assurer un effet barrière de gaz (ii) sont sous forme amorphe.

7. Utilisation selon la revendication 1 ou 6, dans laquelle les particules de silice sont dispersées ou sous forme d'agrégats constitués de particules élémentaires de 5 nm à 5 µm.

8. Utilisation selon l'une quelconque des revendications précédentes, dans laquelle la quantité de polymère (P) est de 0,1 à 0,5% massique par rapport à la quantité de particules solides (p) contenues dans le fluide (F).

9. Utilisation selon l'une quelconque des revendications 1 à 8, dans laquelle le bloc (B) est un bloc constitué au moins majoritairement par des unités monomères choisies dans le groupe consistant en les unités monomères U1 à U5 définies ci-dessous, et les mélanges de ces unités monomères :
- unités monomères U1: unités monomères comprenant un groupement fonctionnel acrylamide ;
- unités monomères U2 : unités monomères comprenant un groupement fonctionnel acide sulfonique ou sulfonate ;
- unités monomères U3 : unités monomères neutres incluant les esters d'acides mono- ou di- carboxyliques [alpha],[beta]-éthyléniquement insaturés avec des alcanediols en C2-C30 ou des polyéthylèneglycols, et les acrylates de tétrahydrofurfuryle, de vinyl acétamide, vinyl pyrrolidone, N-vinyl pipéridone, N-vinyl caprolactame, N-vinyl-5-methyl-2-pyrrolidone, N-vinyl-5-éthyl-2-pyrrolidone, N-vinyl-6-méthyl-2-pipéridone, N-vinyl-6-éthyl-2-pipéridone, N-vinyl-7-méthyl-2-caprolactame, N-vinyl-7-éthyl-2-caprolactame ;
- unités monomères U4: unités monomères porteuses de groupements ammonium, incluant les amides d'acides mono- ou di- carboxyliques [alpha],[beta]-éthyléniquement insaturés avec des diamines ayant au moins un groupe amine primaire ou secondaire ; les N,N-diallylamines et N,N-diallyl-N-alkylamines ;
- unités monomères U5 : unités monomères acrylate, porteuses de groupement COOH ou COO⁻ ;
le bloc (B) pouvant optionnellement comprendre des monomères hydrophobes à raison de 0,05% à 10% en masse par rapport à la masse totale d'unités monomères dans le bloc (B), et choisis parmi les acrylates d'alkyle, le styrène, les méthacrylates d'alkyle, et/ou l'acétate de vinyle.

10. Utilisation selon la revendication 1, dans laquelle :
- le bloc (B) comprend des unités monomères U1 comprenant un groupement fonctionnel acrylamide, et optionnellement des unités U2 comprenant un groupement fonctionnel acide sulfonique ou sulfonate;
et
- le bloc (B) a une masse moléculaire moyenne en poids comprise entre 150 000 et 750 000 g/mol.

## Patentansprüche

1. Verwendung einer Kombination aus einem Blockcopolymer (P) und Partikeln, die zur Gewährleistung einer Gasbarriere geeignet sind, als Mittel zur Steuerung des Filtrats und der Gasmigration in einem Fluid (F), das unter Druck in eine unterirdische Formation injiziert wird,
wobei das Fluid (F) wässrig ist und Feststoffpartikel (p) umfasst und/oder nach seiner Injektion innerhalb der unterirdischen Formation mit Feststoffpartikeln (p) in Kontakt kommt, wobei es sich bei dem Fluid (F) um einen Ölzementschlamm handelt, der das Blockcopolymer (P) als Additiv umfasst,
wobei die Feststoffpartikel (p) mineralische Partikel sind, ausgewählt aus Zement-, Kalziumkarbonat-, Ton-, Baryt-, Siliziumdioxid-, Sand- oder Rußpartikeln,
wobei das
(i). Blockcopolymer (P) umfasst:
- einen ersten Block (A), der sich an mindestens einen Teil der Feststoffpartikel (p) anlagert; und
- einen zweiten Block (B), dessen Zusammensetzung sich von der des ersten Blocks (A) unterscheidet, dessen durchschnittliches Molekulargewicht über 10 000 g/mol liegt und der in dem Fluid (F) löslich ist,
(ii). wobei es sich bei den Partikeln zur Gewährleistung einer Gasbarriere um Latex oder Siliziumdioxidpartikel handelt,
- der Latex liegt in Form einer Suspension vor, die 35 bis 60 Gew.-% Trockenlatex enthält, und die Menge an Trockenlatex beträgt 1,5 bis 6 Gew.-%, bezogen auf die Menge der in dem Fluid (F) enthaltenen Feststoffpartikel (p), und
- die Menge an Siliziumdioxid beträgt 1,5 bis 6 Gew.-%, bezogen auf die Menge der in dem Fluid (F) enthaltenen Feststoffpartikel (p); und
wobei der erste Block (A) zumindest überwiegend aus Monomereinheiten besteht, die je nach Art der Feststoffpartikel (p) aus den nachfolgend definierten bevorzugten Gruppen ausgewählt sind:
• für Feststoffpartikel (p) aus Kalziumkarbonat oder Zement:
besteht der Block (A) zumindest überwiegend aus:
- Monomereinheiten U5, nämlich Acrylat-Monomereinheiten, die eine COOH- oder COO-Gruppe tragen; und/oder
- Monomereinheiten U3, nämlich neutrale Monomereinheiten, einschließlich Ester von [alpha],[beta]-ethylenisch ungesättigten Mono- oder Dicarbonsäuren mit C2-C30-Alkandiolen oder Polyethylenglykolen, sowie Acrylate von Tetrahydrofurfuryl, Vinylacetamid, Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam; und/oder
- Monomereinheiten U6, die Phosphat-, Phosphonat- oder Phosphinatgruppen in Form von freier Säure und/oder in Salzform tragen;
• für Feststoffpartikel (p) aus Siliziumdioxid oder Sand:
besteht der Block (A) zumindest überwiegend aus:
- Monomereinheiten U3 des vorgenannten Typs; und/oder
- Monomereinheiten U4, nämlich Monomereinheiten, die Ammoniumgruppen tragen, einschließlich der Amide von [alpha],[beta]-ethylenisch ungesättigten Mono- oder Dicarbonsäuren mit Diaminen, die mindestens eine primäre oder sekundäre Amingruppe aufweisen; N,N-Diallylamine und N,N-Diallyl-N-alkylamine; und/oder
- Monomereinheiten U7, die ein mit Polydimethylsiloxanen funktionalisiertes (Meth)acrylat umfassen;
• für Feststoffpartikel (p) aus Ton:
besteht der Block (A) zumindest überwiegend aus:
- Monomereinheiten U4 des vorgenannten Typs; und/oder
- Monomereinheiten U6 des vorgenannten Typs;
• für Feststoffpartikel (p) aus Ruß:
besteht der Block (A) zumindest überwiegend aus hydrophoben Monomereinheiten U8, darunter:
- [alpha],[beta]-ethylenisch ungesättigte Mono- oder Dicarbonsäureester mit C1-20-Alkoholen; und/oder
- vinylaromatische Monomereinheiten; und/oder
- fluorierte Monomereinheiten.

2. Verwendung nach Anspruch 1, wobei der Latex in Form einer Suspension vorliegt, die 40 bis 50 Gew.-% Trockenlatex enthält.

3. Verwendung nach Anspruch 1, wobei es sich bei dem Latex um Styrol-Butadien-Latex handelt.

4. Verwendung nach Anspruch 3, wobei das Gewichtsverhältnis von Styrol zu Butadien zwischen 30:70 und 70:30 liegt.

5. Verwendung nach Anspruch 2, wobei das Verhältnis der Massenkonzentration des Polymers (P) zu der des Trockenlatex zwischen 4 und 8 % liegt.

6. Verwendung nach Anspruch 1, wobei die Siliziumdioxidpartikel zur Gewährleistung einer Gasbarrierewirkung (ii) in amorpher Form vorliegen.

7. Verwendung nach Anspruch 1 oder 6, wobei die Siliziumdioxidpartikel dispergiert sind oder in Form von Aggregaten vorliegen, die aus Einzelpartikeln mit einer Größe von 5 nm bis 5 µm bestehen.

8. Verwendung nach einem der vorstehenden Ansprüche, wobei die Polymermenge (P) 0,1 bis 0,5 Massenprozent, bezogen auf die Menge der in dem Fluid (F) enthaltenen Feststoffpartikel (p), beträgt.

9. Verwendung nach einem der Ansprüche 1 bis 8, wobei der Block (B) ein Block ist, der zumindest überwiegend aus Monomereinheiten besteht, die aus der Gruppe ausgewählt sind, die aus den nachstehend definierten Monomereinheiten U1 bis U5 und Mischungen dieser Monomereinheiten besteht:
- Monomereinheiten U1: Monomereinheiten umfassend eine Acrylamid-Funktionsgruppe;
- Monomereinheiten U2: Monomereinheiten umfassend eine Sulfonsäure- oder Sulfonat-Funktionsgruppe;
- Monomereinheiten U3: neutrale Monomereinheiten, einschließlich Ester von [alpha],[beta]-ethylenisch ungesättigten Mono- oder Dicarbonsäuren mit C2-C30-Alkandiolen oder Polyethylenglykolen, sowie Acrylate von Tetrahydrofurfuryl, Vinylacetamid, Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam;
- Monomereinheiten U4: Monomereinheiten, die Ammoniumgruppen tragen, einschließlich der Amide von [alpha],[beta]-ethylenisch ungesättigten Mono- oder Dicarbonsäuren mit Diaminen, die mindestens eine primäre oder sekundäre Amingruppe aufweisen; N,N-Diallylamine und N,N-Diallyl-N-alkylamine;
- Monomereinheiten U5: Acrylat-Monomereinheiten, die eine COOH- oder COO-Gruppe tragen;
wobei der Block (B) optional hydrophobe Monomere in einer Menge von 0,05 bis 10 Massenprozent, bezogen auf die Gesamtmasse der Monomereinheiten im Block (B), enthalten kann, die aus Alkylacrylaten, Styrol, Alkylmethacrylaten und/oder Vinylacetat ausgewählt sind.

10. Verwendung nach Anspruch 1, wobei:
- der Block (B) Monomereinheiten U1, die eine Acrylamid-Funktionsgruppe enthalten, und gegebenenfalls Einheiten U2, die eine Sulfonsäure- oder Sulfonsäure-Funktionsgruppe enthalten, umfasst;
und
- der Block (B) ein durchschnittliches Molekulargewicht zwischen 150 000 und 750 000 g/mol aufweist.

## Claims

1. Use of a combination comprising a block polymer (P) and particles capable of providing a gas barrier effect as an agent for controlling the fluid loss and the migration of gas in a fluid (F) injected under pressure into an underground formation,
wherein said fluid (F) is aqueous and comprises solid particles (p) and/or is brought into contact with solid particles (p) within the underground formation following its injection, said fluid (F) being an oilwell cement slurry comprising the block polymer (P) as an additive,
wherein the solid particles (p) are mineral particles selected from particles of cement, calcium carbonate, clay, barite, silica, sand or carbon black,
wherein
(i). the block polymer (P) comprises:
- a first block (A) which adsorbs onto at least a portion of the solid particles (p); and
- a second block (B), having a composition different from that of said first block (A), having a weight-average molecular weight greater than 10,000 g/mol and being soluble in the fluid (F),
(ii). the particles capable of providing a gas barrier effect are latex particles or silica particles,
- the latex is in the form of a suspension containing from 35 to 60 wt.% dry latex, and the amount of dry latex is from 1.5 to 6 wt.% relative to the amount of solid particles (p) contained in the fluid (F); and
- the quantity of silica is 1.5 to 6% by mass with respect to the quantity of solid particles (p) contained in the fluid (F); and
wherein the first block (A) consists at least predominantly of monomer units chosen from the preferred groups defined below, as a function of the nature of the solid particles (p):
• for calcium carbonate or cement solid particles (p):
block (A) consists predominantly of:
- monomer units U5, namely acrylate monomer units, bearing a COOH or COO⁻group;
and/or
- U3 monomer units, namely neutral monomer units including esters of α,β-ethylenically unsaturated mono- or dicarboxylic acids with C2-C30 alkanediols or polyethylene glycols, and acrylatetetrahydrofurfuryl acrylates, vinyl acetamide, vinyl pyrrolidone, N-vinyl piperidone, N-vinyl caprolactam, N-vinyl-5-methyl-2-pyrrolidone, N-vinyl-5-ethyl-2-pyrrolidone, N-vinyl-6-methyl-2-piperidone, N-vinyl-6-ethyl-2-piperidone, N-vinyl-7-methyl-2-caprolactam, and N-vinyl-7-ethyl-2-caprolactam; and/or
- U6 monomer units bearing phosphate, phosphonate or phosphinate groups in free-acid form and/or salt form;
• for silica or sand solid particles (p):
block (A) consists predominantly of:
- monomer units U3 of the aforementioned type; and/or
- U4 monomer units, namely monomer units bearing ammonium groups, including amides of α,β-ethylenically unsaturated mono- or dicarboxylic acids with diamines having at least one primary or secondary amine group; N,N-diallylamines and N,N-diallyl-N-alkylamines; and/or
- U7 monomer units including a (meth)acrylate functionalized with polydimethylsiloxanes;
• for clay solid particles (p):
block (A) consists predominantly of:
- monomer units U4 of the aforementioned type; and/or
- monomer units U6 of the aforementioned type;
• for carbon black solid particles (p):
block (A) consists predominantly of hydrophobic U8 monomer units, including:
- esters of α,β-ethylenically unsaturated mono- or dicarboxylic acids with C1-C20 alcohols; and/or
- vinylaromatic monomer units; and/or
- fluorinated monomer units.

2. Use according to claim 1, wherein the latex is in the form of a suspension containing from 40 to 50 wt.% of dry latex.

3. Use according to claim 1, wherein the latex is a styrene-butadiene latex.

4. Use according to claim 3, wherein the styrene-to-butadiene weight ratio is between 30:70 and 70:30.

5. Use according to claim 2, wherein the mass concentration ratio of polymer (P) to dry latex is between 4 and 8%.

6. Use according to claim 1, wherein the silica particles capable of providing a gas barrier effect (ii) are in amorphous form.

7. Use according to claim 1 or 6, wherein the silica particles are dispersed or are in the form of aggregates made up of elementary particles of 5 nm to 5 µm.

8. Use according to any one of the preceding claims, wherein the amount of polymer (P) is from 0.1 to 0.5 wt.% relative to the amount of solid particles (p) contained in the fluid (F).

9. Use according to any one of claims 1 to 8, wherein block (B) is a block consisting predominantly of monomer units selected from the group consisting of U1 to U5 monomer units defined below, and mixtures of such monomer units:
- monomer units U1: monomer units comprising an acrylamide functional group;
- monomer units U2: monomer units comprising a sulfonic acid or sulfonate functional group;
- monomer units U3: neutral monomer units including including esters of α,β-ethylenically unsaturated mono- or dicarboxylic acids with C2-C30 alkanediols or polyethylene glycols, and acrylatetetrahydrofurfuryl acrylates, vinyl acetamide, vinyl pyrrolidone, N-vinyl piperidone, N-vinyl caprolactam, N-vinyl-5-methyl-2-pyrrolidone, N-vinyl-5-ethyl-2-pyrrolidone, N-vinyl-6-methyl-2-piperidone, N-vinyl-6-ethyl-2-piperidone, N-vinyl-7-methyl-2-caprolactam, and N-vinyl-7-ethyl-2-caprolactam; and/or
- monomer units U4: monomer units bearing ammonium groups, including amides of α,β-ethylenically unsaturated mono- or dicarboxylic acids with diamines having at least one primary or secondary amine group; N,N-diallylamines and N,N-diallyl-N-alkylamines;
- monomer units U5: acrylate monomer units, bearing a COOH or COO⁻ group;
block (B) may optionally comprise hydrophobic monomers in a proportion of 0.05 to 10 wt.% relative to the total weight of monomer units in block (B), and selected from alkyl acrylates, styrene, alkyl methacrylates, and/or vinyl acetate

10. Use according to claim 1, wherein:
- the block (B) comprises monomer units U1 comprising an acrylamide functional group, and optionally units U2 comprising a sulfonic acid or sulfonate functional group;
and
- the block (B) has a weight-average molecular weight of between 150,000 and 750,000 g/mol.
